# EUROPEAN PATENT SPECIFICATION

(11) **EP 0 691 904 B1**
(45) Date of publication and mention of the grant of the patent: **10.03.1999**
(21) Application number: 94912935.7
(22) Date of filing: 31.03.1994
(51) Int. Cl.: B32B 3/00, B32B 27/14, B32B 31/00, B41M 3/12, B41M 5/20, B41M 5/24, B44C 1/00, G03C 8/00, G03G 8/00, G03G 13/14, G03G 5/02, G03G 5/14, G03G 11/00

(54) **ELECTROGRAPHIC ELEMENT AND PROCESS**
ELEKTROGRAPHISCHEN ELEMENT UND VERFAHREN
ELEMENT ET PROCEDE ELECTROGRAPHIQUES

(30) Priority: 02.04.1993 US 42278; 03.09.1993 US 115562; 03.09.1993 US 115563; 29.03.1994 US 219395
(43) Date of publication of application: 17.01.1996
(60) Divisional application: 98202436.6
(73) Proprietor: Rexam Graphics Inc., South Hadley, MA 01075-2894 (US)
(72) Inventor: CAHILL, Douglas, Allan, Belchertown, MA 01007 (US); HIMMELWRIGHT, Richard, Scott, Wilbraham, MA 01095 (US); TAYLOR, Dene, Harvey, Holyoke, MA 01040 (US); BRAULT, Donald Armand, Granby, MA 01033-9709 (US); WEBB, Anthony, Keith, Vancouver, WA 98686 (US)
(74) Representative: Hillier, Peter
(86) International application number: US9403626
(87) International publication number: WO9422667

(56) References cited:
- EP-A- 0 435 599
- EP-A- 0 437 073
- EP-A- 0 454 233
- DE-A- 4 036 463
- FR-A- 2 670 434
- US-A- 3 985 602
- US-A- 4 322 467
- US-A- 4 404 574
- US-A- 4 555 436
- US-A- 4 581 266
- US-A- 4 875 961
- US-A- 4 920 356
- US-A- 4 965 242
- US-A- 4 983 487
- US-A- 5 102 768
- US-A- 5 108 865
- US-A- 5 139 996
- US-A- 5 141 916
- US-A- 5 210 068
- US-A- 5 217 793
- US-A- 5 244 524
- US-A- 5 269 865
- US-A- 5 269 866
- US-A- 5 270 282
- US-A- 5 273 808
- US-A- 5 281 573
- US-A- 5 286 559
- US-A- 5 292 710
- US-A- 5 294 591
- US-A- 5 296 444
- US-A- 5 302 433

## Description

### Field of the Invention

This invention relates to electrographic processes for making color images. More particularly, this invention relates to electrographic processes and the elements used therein for the production of large size, full color images.

### Description of Related Art

The use of electrographic processes to generate images, including multicolor images, is well known in the art. In such processes, a latent image in the form of a distribution of electric charges is produced directly on a substrate having a dielectric surface using an electrographic printer. The printer operates by depositing charge imagewise onto the dielectric surface of the substrate using a scanning stylus or a plurality of styli may be used, are arranged in linear arrays across the width of the moving dielectric surface to create charge patterns. The latent image is then made visible by applying toner particles which adhere to the charged areas on the charged surface.

Color images may be generated using serially positioned charge depositing and toning stations which operate sequentially to apply three or four colors on a moving web to generate a colored image thereon.

A problem with the resulting toned image is that it is vulnerable to damage in handling and viewing. Protective coatings for the toned surface are often used to give resistance to abrasion, UV light degradation, bacterial degradation, molds and fungi, unwanted markings especially graffiti or to chemical degradation from water, smog or other chemical agent by applying an additional coating by lamination or spray to the electrographic image.

Another problem for the electrographic printing industry is that there are many substrates upon which it is desirable to print but which are not suitable for direct electrographic imaging. Thick films, papers and boards, wooden, ceramic and metal surfaces are but a few examples. A transfer process must be used to place an electrographically generated image on these surface.

One such transfer process of electrographically produced toner images is disclosed in US-A-5108865. In the disclosed process, a liquid toned image is generated on the surface of an electrographic element. The image is adhered to the adhesive surface of an intermediate receptor sheet which comprises a carrier layer, releasable release layer, and a transferable adhesive layer secured to the release layer. The intermediate receptor sheet with the image adhered thereto is removed from the electrographic element, and the toned image now on the intermediate receptor sheet is contacted with a final receptor surface. The adhesive layer secures the toned image, adhesive layer and release layer to the final receiving layer and the carrier layer to the final receiving layer and the carrier layer is removed from the release layer. European Patent Publication No. 0437073, describes an electrographic imaging process in which an intermediate toned image is formed on a temporary dielectric receptor. The intermediate image is then transferred from the temporary dielectric receptor to a permanent receptor.

US-A-5264291 discloses an image-forming material comprising an insulating support, an electroconductive layer thereon, a dielectric layer and a second dielectric layer on one of the other layers, the second dielectric layer being peelable from an adjacent layer.

EP-A-0435599, discloses an ionographic imaging system using an ionographic imaging member including a conductive layer and a uniform dielectric layer having a dielectric constant of 1.5 to 40 and a thickness of about 45 µm.

In the electrographic process disclosed in the prior art there occurs a transfer of the toner particles forming the image from an electrographic element to the final substrate. Although advances have been made in retaining the integrity of the transferred toned image, some transferred image degradation still occurs, and abrasion or chemical interaction after transfer remains a problem which is cured by adding laminating or overcoating steps. Thus, there continues to be a need for a simplified process to provide protected, distortion-free, full-colour images, particularly, for use on large format posters, billboards and the like.

Accordingly the invention provides an electrographic element comprising a conductive base, and a transparent imaging layer structure having a surface on which a toned image is intended to be formed, the transparent imaging layer structure is transparent in at least one region in the visible spectral region and the transparent imaging layer structure includes a dielectric layer characterised in that the dielectric layer comprises a single combined dielectric and adhesive layer whose adhesive properties are activated at a pressure which is above ambient pressure of the electrographic element.

The base layer is typically a conductive layer which includes a release layer in contact with the image structure layer.

The invention also provides an electrographic imaging process for forming an image on a receptor surface comprising the steps of electrographically generating a toned image on a surface of a transparent imaging layer structure of an electrographic element comprising a base and the transparent imaging layer structure, wherein the transparent imaging layer structure is transparent in at least one region in the visible spectral region;
adhering the electrographic element onto said receptor surface so that the toned image is between the imaging layer structure and the receptor surface; characterised in that the dielectric layer comprises a single combined dielectric and adhesive layer whose adhesive properties are activated at a pressure which is above ambient pressure of the electrographic element.

The invention can be more fully understood from the following description thereof in connection with the accompanying drawings, in which:
Figure 1 is a schematic representation of an electrographic element structure for use with the process of the present invention.
Figure 2 is a schematic representation of the base structure of the element of figure 1.
Figure 4 is a schematic representation of a preferred electrographic element structure having combined dielectric and adhesive layers for use with the process of the present invention.
Figure 5 is a schematic representation of an apparatus useful for imaging the electrographic element in accordance with this invention.
Figure 6 shows in a schematic representation an imaged electrographic element in accordance with the present invention.
Figure 7 shows in a schematic representation the element of figure 4 laminated onto a permanent receptor.
Figure 8 shows in a schematic representation the final image on the permanent receptor, after the base has been removed.
Figure 9 shows a cross sectional view of the laminated composite of the imaged electrographic element and the permanent receptor taken along line 9-9 of the illustration of figure 8.
Figure 10 illustrates in schematic representation the process of lamination of the element onto a permanent receptor followed by the stripping of the base.

### DETAILED DESCRIPTION OF THE INVENTION

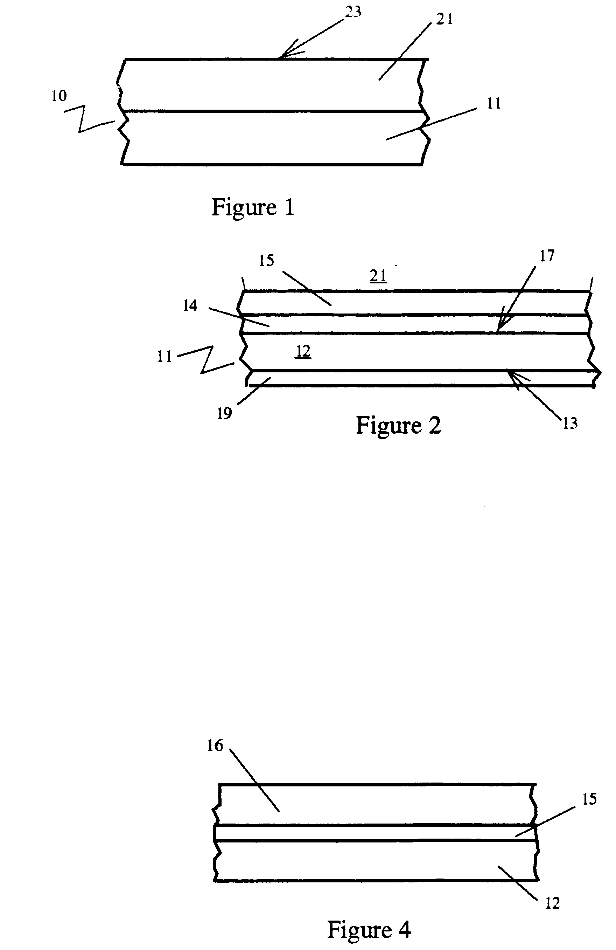

The electrographic process of this invention will now be described by reference to the accompanying drawings. Throughout the following description, similar reference characters refer to similar elements in all figures of the drawings. Referring to figure 1, an electrographic element (10) is shown for use in the present invention. The element comprises a conductive base (11) and an imaging layer structure (21) coated over said base. The imaging layer structure (21) has an image receptive surface (23).

The base (11) functions as a support to the superposed layers and may be any web or sheet material possessing suitable flexibility, dimensional stability and adherence properties to those layers. Typically, the base will have an electrical resistivity of about 1 to 30 meg-ohm per □.

Suitable web or sheet materials for the base are flexible polymeric films, e.g., such as polyethylene terephthalate film and the like, or a foraminous material, e.g., such as a paper sheet and the like, treated to be electrically conductive or semi-conductive. Other suitable materials are for instance, metal foils, metallized polymeric films such as polyethylene terephthalate films having a metallic coating thereon, conductive paper sheeting and the like.

As shown in Figure 2, the base may itself comprise a multilayer structure. In its simplest form, the base may include a carrier sheet (12) which is conductive, having a front side (17) and a back side (13) The front side (17) is covered by a release layer (15) over which is placed the imaging layer structure (21). In an alternate embodiment, a conductive layer (14) is coated over the carrier sheet (12) between the carrier sheet and the release layer. In yet another embodiment, the back side (13) of carrier sheet (12) is also covered by a conductive layer (19).

When the base comprises a carrier sheet (12), the carrier sheet (12) is again a flexible web or sheet material, which may again be a flexible polymeric film, e.g., such as polyethylene terephthalate film and the like, or a foraminous material, e.g., such as a paper sheet and the like. A conductive layer (14) may be coated over the carrier sheet (12) or the carrier sheet (12) may or may not be itself conductive.

The conductive layer (14) preferably comprises a film-forming material which may be an organic material, e.g., such as a cation type styrene-methacrylate copolymer having an electrical resistivity of about 1 to 30 meg-ohm per □. Other suitable film-forming, organic materials include polymeric quaternary ammonium compounds, polystyrene sulfonic acid, polymeric matrices capable of ionizing inorganic electrolytes contained therein, and the like. The film-forming, organic material may be used alone or with conductive, inorganic materials and/or metals dispersed therein, e.g., such as tin oxide, aluminum and the like.

The release layer (15) which is adhered to the front surface (17) of the base (11) or to the conductive layer (14) as shown in figure 2, typically comprises a film forming silicone polymer, or a film forming fluoropolymer. The release layer may also be heat cured, U.V radiation cured, or electron beam cured. The release layer may itself be conductive or contain conductive agents such as a quaternary ammonium polymer, and may further include a surfactant. Good release performance has been obtained when the surface energy of the release layer is between 20 and 40 dynes/cm and preferably between 25 and 35 dynes/cm.

The imaging layer structure (21) used in this invention is transparent. A transparent imaging layer structure is one in which the layers and combination of layers of the structure, allow sufficient radiation transmission in at least one region of the visual spectrum to allow the visual observation of a toned image placed on one side of said layer structure from the other side of the layer structure.

The imaging layer structure (21) may also comprise one or more distinct layers each having a specific function.

The electrographic element may be formulated to provide the necessary resistance to abrasion and U.V. or other detrimental radiation as well as contain biocides and fungicides to act as a protective layer. The use of Butvar® polyvinyl butyral in the dielectric formulation for instance results in a dielectric layer with excellent resistance to scratching. In an alternate embodiment, a protective layer separate from the dielectric layer may be provided.

The protective layer is a polymeric film material which is resistant to scratching, abrasions and the like, and to environmental components and contaminants, and may also include biocides and fungicides. The protective layer is also visually transparent in at least one region within the visible spectral region and typically is transparent throughout the visible spectral region. Polymeric materials which are useful in making this layer include polyvinyl chloride; polyvinyl butyral; cellulose acetate propionate; cellulose acetate butyrate; polyesters; acrylics; polyurethanes; styrene copolymers, e.g., such as styrene acrylonitrile; and combinations thereof. This layer typically has a thickness in the range of about 0.5 µm to about 10 µm and preferably in the range of about 1 µm to about 4 µm. Such layer typically will withstand scribing with the point of a 4H pencil without breakthrough.

In certain instances it may be desirable to include a transparent conductive layer as a part of the imaging layer structure. Such layer may be formulated to act as a release layer between the base and the image structure layer, by adapting it to adhere more strongly to the dielectric or the protective layer as the case may be, than to the base.

The conductive layer comprises a film-forming, organic material, e.g., such as a cation type styrene-methacrylate copolymer having an electrical resistivity of about 1 to 30 meg-ohm per □. Suitable film-forming, organic materials include polymeric quaternary ammonium compounds, polystyrene sulfonic acid, polymeric matrices capable of ionizing inorganic electrolytes contained therein, and the like. The film-forming, organic material may be used alone or with conductive, inorganic materials and/or metals dispersed therein, e.g., such as tin oxide, aluminum and the like.

Figure 4 shows the electrographic imaging element in accordance with the present invention which comprises a base comprising a conductive carrier sheet (12) and a release layer (15). The element further includes a combined dielectric and adhesive layer (16). This combined dielectric and adhesive layer (16), may be any conventional transparent film-forming material having a dielectric constant of about 2 to about 5. This layer typically has a thickness in the range of about 1 µm to about 20 µm and preferably in the range of about 5 µm to about 15 µm.

This transparent combined dielectric and adhesive layer (16) typically comprises one or more polyesters; polyurethanes; polyamides; polyolefins; polycarbonates; polystyrenes; and/or polymers or copolymers of acrylic or methacrylic acids, esters, amides, or the like (such as polymethylmethacrylate), styrenes, acrylonitriles, vinyl esters, alkyd substituted vinyl esters, vinyl alcohol, vinyl acetals (e.g., polyvinyl butyral), vinyl chloride, vinyl fluoride, vinylidene chloride, 1,4-dienes (e.g., butadiene, isoprene and the like); ethylene/vinyl alcohol copolymers; copolymers of styrene with acrylic and methacrylic monomers; modified cellulosic resins such as cellulose acetate and cellulose acetate butyrate; block copolymer thermoplastic rubbers (e.g., styrene/ethylene/ butylene/styrene block copolymer); and blends of the above.

The combined dielectric and adhesive layer (16) in addition to its dielectric properties, is activated at a pressure and, optionally, at a temperature that is above the normal ambient pressure and temperature of the electrographic element prior to use to exhibit its adhesive properties. Thus the combined dielectric and adhesive layer is non tacky prior to activation.

The surface of the imaging layer structure (21) may be made rough to ensure good transfer of charge during passage of the element under the stylus bar during imaging. This roughness can be obtained by including in the uppermost layer particles sufficiently large to give surface irregularities to the layer. Particle composition and size are chosen to give the required surface topography and abrasive properties to the layer. Particles of diameter in the range of about 1 µm to about 15 µm are suitable.

The imaging layer structure (21) may contain in any of its layers, components which strongly absorb ultraviolet radiation thereby reducing damage to underlying images by ambient ultraviolet light, e.g., such as 2-hydroxybenzophenones; oxalanilides; aryl esters and the like; hindered amine light stabilizers, such as bis(2,2,6,6-tetramethyl-4-piperidinyl) sebacate and the like; and combinations thereof. The imaging layer structure serves as a protective layer to the transferred toned image after the image has been transferred onto a receptor substrate as will be described bellow, and is preferably selected to withstand scribing with the point of a 4H pencil without breakthrough.

At times it is desired to provide a range of surface finishes to the finished image. This is done by controlling the surface of the image layer structure in contact with the release layer on the base. The nature of this surface will depend on the nature of the surface of the release layer in contact therewith. Thus if the release layer on the base has a rough texture, the final image will appear matte, and if the release layer surface texture is smooth, the final image will be glossy.

Alternatively, a matte surface on the finished image can be obtained by including in at least one of the layers of the image layer structure particles sufficiently large to give surface irregularities to the layer. Particles of average diameter in the range of about 1 µm to about 15 µm are suitable.

The novel electrographic imaging process comprises the following steps:

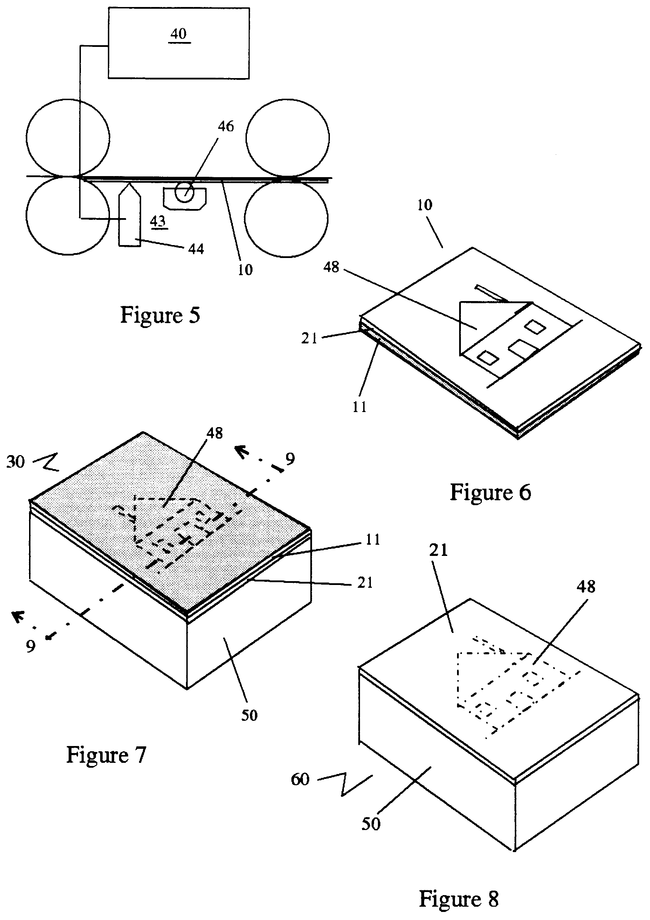

An electrographic toned image is created on the image receptive surface (23) of the imaging layer structure (21) of an electrographic element of the type described above. This is typically done using an electrographic printer of the type shown schematically in figure 5. Such printers are well known in the art and typically may comprise an image source which may be a computer (40), and a mechanical arrangement for generating an image on an electrographic element. The computer (40) in addition to providing image information to the printing station of the printer, usually also controls all functions of the printer, including driving an electrographic element (10) through an imaging station (43) which may comprise an array of styli (44). The computer addresses the styli and instructs them to deposit a predetermined amount of charge on the image receptive surface (23) of the electrographic element. A latent image in the form of a charge distribution is thus formed on the image receptive surface (23) of the electrographic element (10).

The element is next transported through a toning station (46) where an appropriate toner is applied onto the image receptive surface to produce a toned image (48) as shown in figure 6. The toning station may include a fixing substation where the applied toner is fixed, by drying, heat or pressure or any combination thereof, onto the image receptive surface (23).

When a colored image is desired to be reproduced the above process is repeated with additional toners of different colors, in either sequentially arranged imaging and toning stations or by passing the element under the same imaging station and replacing the toner in the toning station. Color reproduction usually requires three and preferably four different color toners to render a pleasing and accurate facsimile of an original color image. The selection of toner colors and the creation of the different images whose combination will provide such accurate rendition of an original image is well known in the art and not the subject of the present invention.

The image (48) created on the image receptive surface in accordance with the present process is a mirror image of the desired reproduction.

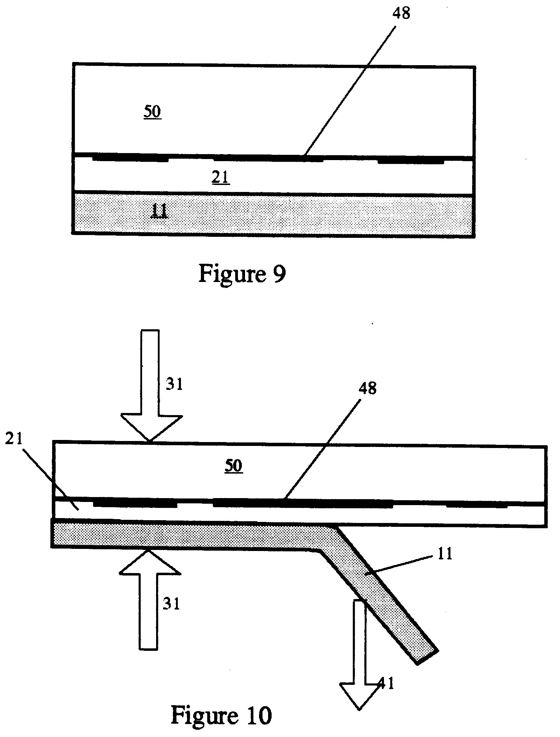

The image (48) is next transferred onto a permanent receptor (50), which may be any substrate on which one desires to have the image placed. Figure 7 illustrates this step. Figure 9 is an elevation cross section taken along '9-9' of figure 7, showing the imaged element adhered onto the permanent receptor (50) following lamination. The permanent receptor (50), typically functions as the final support for the imaged electrographic element formed during the process steps of this invention.

The permanent receptor (50) may be any substrate having a surface upon which an electrographic image is to be placed for display. Typically, it is a web or sheet material possessing dimensional stability and adherence properties to the toned image layer of the imaged electrographic element. The web or sheet material may be a flexible polymeric film, e.g., such as polyethylene terephthalate film and the like; a foraminous material, e.g., such as a paper sheet, textile fabrics, and the like; metal films or webs, e.g., such as aluminum, steel, tin-plate, and the like; or any composites or laminates thereof. The permanent receptor may be a rigid or semi-rigid sheeting or plate, e.g., such as sheeting or plates of metal, glass, ceramic, plastic, cardboard, brick wall, papers, paperboards, wood, leathers and composites of the above or laminates thereof. The permanent receptor may vary in size from that of a photographic print, e.g., having an area of about 30 cm² or less, to that of billboards, e.g., having an area of about 70 m² or greater. The permanent receptor may also be surface treated or coated with a material to enhance desired surface characteristics.

After the image has been produced on the element the receptor substrate is preferably pressure laminated onto the surface of the toned image layer structure (21) of the imaged electrographic element (10), preferably at a temperature which is above the ambient temperature. Referring to Figure 10, the receptor substrate (50) is contacted and pressure laminated to the toned image layer (21) using an applied pressure (31) to the back side of the base (11) and receptor substrate (50) to form a laminated imaged electrographic element.

In accordance with the process of the present invention, the receptor substrate (50) typically is pressure laminated to the toned image surface of the imaged electrographic element (10) under an applied pressure (31) of about atmospheric pressure or greater but may range from about 0.5 kg/cm² to about 100 kg/cm² or more. The term "applied pressure" is intended to mean the absolute pressure which is applied to a unit area of the surface as conventionally derived from the geometry of the pressure means, e.g., the geometry of the laminating nip, in combination with a measurement means, e.g., a calibrated gauge pressure. Suitable means that may be used to apply pressure include platen presses; counterpoised, double roll, laminating devices; scanning, single roll, laminating devices; vacuum laminating devices; and the like. When the receptor substrate (50) has an air impervious surface, roll laminating devices are preferred since they readily minimize air entrapment between the toned image layer and the receptor substrate during the pressure laminating process step. Vacuum may be applied with such devices to further eliminate air entrapment. When the receptor substrate (50) is rigid and roll laminating devices are used, the flexible imaged electrographic element (10) typically is pressure laminated to the receptor substrate (32).

Heat may be used in the pressure laminating step (step (B)) of this invention to raise the temperature of the combined dielectric and adhesive layer (16) from its normal ambient temperature (e.g., room temperature) where it is substantially tack-free, to a temperature at which the adhesive properties are activated. Heat may be applied to the adhesive or combined dielectric and adhesive layer prior to and/or concurrently with the application of the applied pressure (31). Thus, the receptor substrate (50) and/or the imaged electrographic element (10) may be heated prior to pressure lamination by radiant or contact heaters and then laminated while hot. Alternatively the pressure means itself may also function as a heater, e.g., such as a hot roll laminator, or both prior and concurrent heating may be used in combination. Typically, a laminating temperature of about 100°C or greater is employed. Typically, temperature is measured on the surface of the heated roll or platen by means of temperature sensitive tape.

Using the process of this invention, surprisingly strong adhesion of the toned electrographic element (10) to the receptor substrate (50) is achieved with substantially no image distortion, even though the toned image layer (48) is interposed between the imaging layer structure and the receptor substrate (50).

If the base is also transparent and if the particular application so requires, the process is terminated at this point. However it is usually preferred to use inexpensive carrier sheet for the base which is neither transparent nor does it weather satisfactorily, so in the preferred mode, the base is stripped from the laminated element, leaving the image receptive layer overlaying the toned image to act as a protective layer for the transferred image to protect the image from scratching, abrasions, environmental components and contaminants, and the like.

Referring again to Figure 10, the base layer (11) is peeled off, using a peel force (41), from the surface of the image layer structure (21) to form an imaged electrographic element. Typically, the base layer (11) is peeled with a peel force (41) directed at an angle of 90° or more from the surface of the image layer structure. The peel rate and the peel force (41) are not critical and preferred values will depend on the nature of the conductive and carrier materials. The temperature at which the base layer (11) is peeled from the image layer structure will depend on the properties of the release layer. Surprisingly has been found that the base layer (11) can be removed immediately after formation of the imaged electrographic element (30) (i.e., while still in a heated state from the lamination in the second process step) without delamination of the imaging layer structure (21) or any of the component layers. In this context, the term "immediately" is intended to mean a time span of about 1 minute or less and preferably between about 1 second and about 20 seconds. Still more preferably the base is removed after about 5 to 10 seconds.

In the practice of the process of this invention where the base layer is to be removed, it is preferred to keep the base layer in place on the imaged electrographic element throughout storage and processing in order to prevent any damage or marring to the underlying layers. In this instance, removal of the base layer is the very last step in preparing and mounting the protected electrographic image.

As has also been surprisingly found, the base need not be removed immediately. The formed laminated imaged electrographic element (30) may be cooled and stored before removal of the base. In this instance, the base layer (11) can be removed at room temperature front the imaged electrographic element (30) without delamination of the image layer structure from the receptor.

Alternatively, the imaged electrographic element (30) may be reheated prior to removal of the base layer (11).

The electrographic process of this invention will now be illustrated by the following examples but is not intended to be limited thereby. A number of products by different manufacturers are used in this invention and in the examples below. The following is a reference table for identifying such products and their respective trade names.
(1) Chemistat® 6300H electroconductive polymer is a product of Sanyo Chemical Industries and is a cation type styrene-methacrylate copolymer in aqueous solution.
(2) Butvar® B-76 polyvinyl butyral (weight ave. molecular weight: 90,000-120,000) is a product of Monsanto Company, St. Louis, Missouri.
(3) Butvar® B-79 polyvinyl butyral (weight ave. molecular weight: 50,000-80,000) is a product of Monsanto Company, St. Louis, Missouri.
(4) E-342 Acrylic resin is a product of Rohm and Hass and is a solvent based modified acrylic copolymer.
(5) Syloid® amorphous silica is produced by Davison Chemical Division, W.R. Grace & Co., Baltimore Md. in various average particle sizes
(6) Hydrocarb® PG3 wet ground calcium carbonate with average particle size of 3 µm is a product of OMYA, Proctor, Vermont.
(7) Piccolastic® A-5 low molecular weight polystyrene is a product of Hercules Co., Wilmington, Delaware.
(8) Dowanol® PM is propylene glycol mono methyl ether and is a product of Dow Chemical Corp.
(9) Kraton® FG-1921X is a styrene ethylene butylene styrene block copolymer thermoplastic rubber and is a product of Shell Oil Company, Houston, Texas.
(10) Calcined clay is Translink® calcined clay, and is a product of Englehard Corporation, Edison, N.J.
(11) Lustran® 33-1000 SAN resin is a styrene-acrylonitrile copolymer and is a product of Monsanto Company, St. Louis, Missouri.
(12) Morthane® CA-116 urethane resin is a hydroxyl terminated polyurethane elastomer and is a product of Morton-Thiokol.
(13) Cellulose acetate propionate is C.A.P. 504-0.2 cellulose ester, a product of Eastman Chemicals.
(14) Hexamethoxymethylmelamine is Cymel® 301 melamineformaldehyde crosslinking resin, and is a product of Cyanamid Corporation.
(15) Chemistat® 7005 electroconductive polymer is a product of Sanyo Chemical Industries and is an aqueous solution of a polycationic water-soluble organic polymer. The light yellow liquid contains approximately 40 % active ingredients, has a pH of 4.5, and a viscosity at 25°C of 330 cps.
(16) Polycaprolactone which is Tone® Polymer P-767E biodegradable plastic resin, a product of Union Carbide.

### Example 1

An electrographic element having the structure shown in figure 2, was prepared as follows: A 70 g/m² opaque conductive paper available from Chartham Paper Mills, Canterbury, Kent, U.K. was coated by the reverse gravure method with a silicone release layer (SWM 96"C" available from Release International, West Chicago, Illinois) at a coated weight of 1.46 g/m² and cured by electron beam radiation. This formed a conductive carrier sheet having a release layer thereon. The surface electrical resistivity of the release layer measured at 50% relative humidity (RH) was 9 Mohm/square, the surface energy was between 25 and 30 dynes/cm, and the Sheffield Smoothness was 25 ml/min.

A conductive coating was prepared from the following ingredients:

| Ingredient | Parts by Weight |
|---|---|
| Ethanol | 57 |
| Water | 19 |
| Chemistat® 6300H⁽¹⁾ | 24 |

The three ingredients were mixed together with a Lightnin Mixer for 10 minutes.

This coating was applied to the side opposite the release coating on the conductive paper by the rod coating method at a wet coat weight of 15.6 g/m² and dried. The resulting coated conductive paper formed the conductive base for this element.

A combined dielectric and adhesive coating mixture which also has protective properties, and wherein the adhesive properties are heat activated, was prepared from the following ingredients:

| Ingredient | Parts by Weight |
|---|---|
| Ethanol | 120 |
| Acetone | 440 |
| Toluene | 720 |
| Butvar B-76⁽²⁾ polyvinyl butyral | 130 |
| E-342⁽⁴⁾ Acrylic Resin | 440 |
| Syloid® 74⁽⁵⁾ Amorphous silica | 20 |
| Hydrocarb® PG3⁽⁶⁾ | 175 |
| Piccolastic® A-5⁽⁷⁾ | 52 |

The first three of the above ingredients were added to a Kady mill and the Butvar® was stirred in. After 15 minutes of mixing the acrylic resin and the polystyrene were added. After a further 5 minutes of mixing the calcium carbonate and the amorphous silica were added and the mixing continued for 10 minutes.

The above dielectric mixture was applied to the release coated surface of the conductive base paper by reverse roll coating and dried to give a dry coat weight of 7.3 g/m², to form the electrographic element.

Rolls of the electrographic element were moisturized to a level of from 6 to 7% by weight and a four color toned image layer was deposited on the adhesive protective dielectric layer using a Versatec® 8944 Color Electrostatic Printer (a product of Xerox Engineering Systems, San Jose, California) using standard toners and plotting conditions. Observed image quality was rated high.

The element was next laminated onto a receptor surface by first laying the imaged electrographic element on a receptor sheet of ScotchCal™ 220 pressure sensitive vinyl (a product of 3M Co., St. Paul, Minnesota) with the toned image in contact with the receptor sheet. This composite was then passed through the hot nip of an IT 6000 hot roll laminator (obtained from Image Technologies Corp., Cottage Grove, WI.) at a speed of 0.61m/min, at a temperature of 121°C and a pressure of 7.03 Kg/cm². The base sheet was removed approximately 10 sec. after the laminated composite was removed from the hot nip. The toned image and the dielectric coating remained adhered to the vinyl and the release coating remained on the paper.

The image surface had a low glare surface with a 75° gloss of between 30 and 35%. The image was not removed by 810 Scotch™ Brand Tape when tested with the tape pull procedure. The image withstood cleansing with common non-abrasive household cleaners and scrubbing with a nylon bristle brush.

### Example 2.

An imaged electrographic element prepared as disclosed in example 1 above was laminated onto a Hi-Stat® Static Cling Vinyl receptor substrate using the laminator and laminating conditions also disclosed in example 1. Hi-Stat® Static Cling Vinyl is a product of Catalina, of Calabassas, California. Results were similar to the results of example 1.

### Example 3.

An imaged electrographic element prepared as disclosed in example 1 above was laminated onto a Saturn Opaque Banner® Vinyl receptor substrate using the laminator and laminating conditions also disclosed in example 1. Saturn Opaque Banner Vinyl® is a product of ICG Co., Kingsport, Tennessee. Results were similar to the results of example 1.

### Example 4.

An imaged electrographic element prepared as disclosed in example 1 above was laminated onto an Ultramag® Vinyl Coated Magnetic Material receptor substrate using the laminator and laminating conditions also disclosed in example 1. Ultramag® Vinyl Coated Magnetic Material is a product of Flexmag Industries, Cincinnati, Ohio. Results were similar to the results of example 1.

### Example 5

An imaged electrographic element prepared as disclosed in example 1 above was laminated onto a Komatex® Rigid PVC Board used as the receptor substrate, using the laminator and laminating conditions also disclosed in example 1. Komatex® Rigid PVC Board is a product of Kommerling Co. of Germany, distributed in this country through Kommerling Co., Montvale, New Jersey. Results were similar to the results of example 1.

### Example 6

A roll of an toned, imaged electrographic element prepared as disclosed in example 1 was mounted on the top feed spool of an IT 6000 hot roll laminator and threaded through the nip so that the base side of the element contacted the top hot roll for several inches before the nip. A roll of ScotchCal™ 7725 pressure sensitive vinyl (a product of 3M Co., St. Paul, Minnesota) was mounted on the bottom feed spool and threaded through the nip so that vinyl side was in contact with the image side of the electrographic element. The composite was laminated in the hot nip at a speed of approximately 0.61m/min, a temperature of 121°C and a pressure of 7.03 Kg/m². The laminated composite was collected on the take-up spool of the laminator. The base was removed approximately 5 minutes later. The image and the dielectric coating remained adhered to the vinyl and the release coating remained on the base.

### Example 7

An electrographic element was prepared as follows: A 63 g/m opaque conductive paper available as Product DR Base from Otis Specialty Papers, Livermore Falls, Maine, was coated by the offset gravure method with a silicone release layer identified as SWM 96"C" available from Release International, West Chicago, Illinois at a coated weight of 1.95 g/m². The release layer was cured after coating, by electron beam radiation. The surface electrical resistivity of the release coated surface measured at 50% RH was 3 Mohm/square, the surface energy was between 25 and 30 dynes/cm, and the Sheffield Smoothness was 20 ml/min.

A combined dielectric/adhesive coating mixture having protective and heat activated adhesive properties prepared as described in example 1 was applied to the release coated surface of the conductive base paper by the reverse roll coating method and dried to give a dry coat weight of 7.3 g/m² to form the electrographic element.

Rolls of the electrographic element were moisturized to a level of about 6% by weight and a four color image layer was deposited on the adhesive protective dielectric layer using the Versatec® 8944 Color Electrostatic Printer of example 1 and standard toners and plotting conditions. Image quality was rated high.

The toned element was next laminated on a receptor sheet of ScotchCal™ 220 pressure sensitive vinyl in the same manner as described in example 1. Following lamination, the base was removed approximately 10 sec. after the composite was removed from the hot nip. The image and the combined dielectric and adhesive coating remained adhered to the vinyl while the release coating remained on the conductive paper.

The image on the receptor sheet, had a low glare surface with a 75° gloss of between 40 and 45%. It withstood gentle scribing with 4H and 8H pencils.

### Example 8

An alternate combined dielectric and adhesive coating was prepared from the following ingredients:

| Ingredient | Parts by Weight |
|---|---|
| Toluene | 42.50 |
| Kraton® FG-1921X ⁽⁹⁾ | 7.50 |
| Dowanol® PM ⁽⁸⁾ | 2.93 |
| Toluene | 24.59 |
| Methyl ethyl ketone | 9.55 |
| Calcined clay ⁽¹⁰⁾ (ave. particle size 1.4 µm) | 0.50 |
| Syloid® 74 Amorphous silica ⁽⁵⁾ | 1.05 |
| Lustran® 33-1000 SAN ⁽¹¹⁾ resin | 11.38 |

The toluene was added to a vessel and stirred with a Lightnin mixer. The Kraton® was added slowly and mixed under slow agitation. The remaining ingredients were added in the sequence shown and mixed with a Dispermat® mixer under slow speed agitation and then allowed to mix for 10 minutes at high speed. The two mixtures were then blended in a vessel and stirred at slow speed with the Dispermat® mixer.

The mixture was coated onto a base such as described in example 1 with a No. 12 Meyer rod and dried in an air oven at 116°C for 30 sec. to form an electrographic element having transparent combined dielectric and adhesive layers.

After conditioning a sample of the electrographic element at 50 % relative humidity a toned image was produced on the sample by using a Versatec V-80 electrostatic plotter operated at conventional plotting conditions.

The laminating step was next performed as described in example 1 except that the receptor substrate was Rexcal® 4000, a pressure sensitive vinyl polymer available from Rexham Branded Products, Lancaster, South Carolina. Following lamination, the base was stripped from the combined dielectric and adhesive layer comprising the image layer structure, with the break occurring between the release layer on the base and the combined dielectric and adhesive layer on the image layer structure.

### Example 9 (Comparative)

An electrographic element was prepared as follows: A conductive coating solution was prepared from the following ingredients:

| Ingredient | Parts By Weight |
|---|---|
| Methyl alcohol | 80.0 |
| Deionized water | 12.0 |
| Chemistat® 6300H⁽¹⁾ | 8.0 |

The above ingredients were added in the order shown and mixed in a Lightnin® mixer for 5 minutes. The coating was then applied to a ∼50 µm (2 mil) thick, untreated, polyethylene terephthalate film with a meyer rod and dried in an air dried oven at 115°C for two minutes to give a dry coating thickness of 2.0 µm.

A dielectric layer coating solution was prepared from the following ingredients.

| Ingredient | Parts By Weight |
|---|---|
| Propylene glycol monomethyl ether | 7.32 |
| Toluene | 21.96 |
| E-342 Acrylic resin⁽⁴⁾ | 56.44 |
| Syloid® 74⁽⁵⁾ Amorphous silica | 12.58 |
| Translink⁽³⁾ 77 Calcined clay, (ave. particle size 0.8 µm) | 1.70 |

The above ingredients were added as shown and mixed using a Cowles dispersion mixer for 10 minutes. The solution was overcoated onto the previously coated film using a meyer rod and dried at 115°C for two minutes to give a dry coating thickness of 5.0 µm.

An adhesive layer coating solution was prepared from the following ingredients.

| Ingredient | Parts By Weight |
|---|---|
| Methyl ethyl ketone | 77.96 |
| Toluene | 10.00 |
| Morthane® CA-116⁽¹²⁾ urethane resin | 12.00 |
| Syloid®⁽⁵⁾ Amorphous silica (ave. particle size 3 µm) | 0.04 |

The coating solution was made by mixing the methyl ethyl ketone, toluene and urethane resin for 30 minutes with a high speed Lightnin® mixer. Amorphous silica was then added and mixed for 5 minutes. The solution was overcoated onto the previously coated film using a meyer rod and dried at 115°C for two minutes to give a dry coating thickness of 2.0 µm to form the electrographic element.

The imaged layer was applied to the surface of the imaging layer structure of the electrographic element formed above, by using a Versatec® V-80 electrostatic plotter operated at conventional plotting conditions.

The laminating step was performed by first laying the imaged electrographic element on a sheet of 20lbs xerographic bond paper so that the imaged layer contacted the paper sheet. This composite was then passed through the hot nip of a hot roll laminator at a speed of 2.54 cm per second and at a pressure of 30 Kg/cm². The hot nip consisted of a heated steel roll at a temperature of 115°C and a hard polyurethane backing roll of a B.F. Perkins laboratory calender. The laminated composite exiting the hot nip was allowed to cool to room temperature and the polyethylene terephthalate film was left in place, adhered to the conductive coating, where it functioned as a protective cover sheet for the finished electrographic element.

### Example 10 (Comparative)

The process of Example 9 was repeated except that the laminating step was performed by first laying the imaged electrographic element on a 100 µm (4 mil) thick white vinyl film sheet so that the imaged layer contacted the vinyl sheet. This composite sample was then laminated as in example 9 using B.F. Perkins laboratory calender. Within 10 seconds of the exit of the laminated composite from the hot nip, the polyethylene terephthalate support contiguous to the conductive layer was stripped therefrom.

### Example 11 (Comparative)

An electrographic element containing an interposed protective layer was made as follows: An abrasion resistant coating solution was prepared from the following ingredients.

| Ingredient | Parts By Weight |
|---|---|
| Dowanol PM⁽⁸⁾ | 30.41 |
| Ethyl acetate | 26.41 |
| Toluene | 10.96 |
| Butyrolactone | 9.26 |
| C.A.P. 504-0.2⁽¹³⁾ Cellulose acetate propionate | 20.06 |
| Cymel® 301⁽¹⁴⁾ Hexamethoxymethylmelamine | 2.64 |
| Para-toluene sulfonic acid | 0.53 |
| Syloid®⁽⁵⁾ Amorphous silica (ave. particle size 3 µm) | 0.01 |

The cellulose acetate propionate was added to the solvent blend slowly under a high speed Lightnin® mixer. When fully dissolved, the amorphous silica was then added and mixed for five minutes. The melamine resin and acid catalyst were added and mixed for an additional 15 minutes. The resulting lacquer was then coated on a ∼25 µm (1 mil) thick, untreated, polyethylene terephthalate film using a meyer rod and dried at 115°C for two minutes to give a dry coating thickness of 2.5 µm.

A conductive coating solution was prepared from the following ingredients:

| Ingredient | Parts By Weight |
|---|---|
| Methyl alcohol | 80.0 |
| Deionized water | 12.0 |
| Chemistat® 6300H⁽¹⁾ | 8.0 |

The above ingredients were added in the order shown and mixed in a Lightnin® mixer for 5 minutes. The coating was then applied to the surface of the protective coating with a meyer rod and dried in an air dried oven at 115°C for two minutes to give a dry coating thickness of 2.0 µm.

A dielectric layer coating solution was prepared from the following ingredients.

| Ingredient | Parts By Weight |
|---|---|
| Dowanol® PM⁽⁸⁾ | 7.32 |
| Toluene | 21.96 |
| E-342 Acrylic resin⁽⁴⁾ | 56.44 |
| Syloid® 74⁽⁵⁾ Amorphous silica | 12.58 |
| Translink®⁽¹⁰⁾ Calcined clay (ave. particle size 0.8 µm) | 1.70 |

The above ingredients were added as shown and mixed using a Cowles dispersion mixer for 10 minutes. The solution was overcoated onto the previously coated film using a meyer rod and dried at 115°C for two minutes to give a dry coating thickness of 5.0 µm.

An adhesive layer coating solution was prepared as in example 9 and was coated over the dielectric layer.

A toned image was generated on the adhesive surface of the imaging layer structure of the electrographic element formed above, by using a Versatec® V-80 electrostatic plotter operated at conventional plotting conditions.

The imaged element was laminated on a sheet of 20lbs. xerographic bond paper as in example 9. After the laminated composite had cooled to room temperature, the remaining polyethylene terephthalate support was stripped from the protective layer of the paper backed electrographic image. The protected electrographic image produced could withstand scribing with a 4H pencil with no removal of the protective layer or image.

### Example 12 (Comparative)

An electrographic element was prepared as follows: A conductive coating solution which was Chemistat® 7005⁽¹⁵⁾ was applied to a sheet of 55lb conductive opaque base paper (supplied as OCB90 by Chartham Paper Mill, Canterbury, Kent, U.K.) with a #6 meyer rod and dried in an air dried oven at 115°C for two minutes to give a dry coating thickness of ∼2µm.

A dielectric layer coating solution was prepared from the following ingredients.

| Ingredient | Parts By Weight |
|---|---|
| Toluene | 66 |
| Dowanol® PM⁽⁸⁾ | 22 |
| Polyvinyl butyral (Butvar® B-79 ⁽³⁾) | 10 |
| Syloid®⁽⁵⁾ Amorphous silica (ave. particle size 3 µm) | 2 |

The above ingredients were added in the order shown and mixed using a Dispermat® mixer for 15 minutes. The solution was overcoated onto the previously coated film using a #14 meyer rod and dried at 115°C for two minutes to give a dry coating thickness of ∼ 3 µm.

An adhesive layer coating solution was prepared from the following ingredients.

| Ingredient | Parts By Weight |
|---|---|
| Toluene | 85 |
| Dowanol® PM⁽⁸⁾ | 5 |
| Polycaprolactone⁽¹⁶⁾ | 10 |

The coating solution was made by mixing the ingredients with a high speed Lightnin® mixer until the polycaprolactone was completely in solution. The solution was overcoated onto the previously coated film using a #6 meyer rod and dried at 115°C for two minutes to give a dry coating thickness of ∼2 µm to form the electrographic element.

After conditioning a sample of the electrographic element formed above was imaged using the plotter of example 9.

The laminating step was performed by first laying the imaged electrographic element on an adhesively backed sheet of ∼0.1 mm (4 mil) thick untreated cast vinyl polymer having a removable release liner so that the imaged layer contacted the vinyl sheet. This composite was then passed through the hot nip of an IT 6000 hot roll laminator at a speed of ∼1.02 cm/second, at a temperature of ∼ 121°C and at a pressure of ∼ 70 kg/cm². The laminated composite exiting the hot nip was cooled to room temperature (5 minutes) and the two sheets were pulled apart leaving image and dielectric coatings on the vinyl sheet and the conductive layer on the conductive paper sheet.

### Example 13 (Comparative)

An electrographic element was prepared and processed as described in Example 12 except that the laminating step was performed by first laying the imaged electrographic element on a sheet of ∼ 0.14 mm thick cling vinyl coated with an ink receptive layer and backed with a 10 pt. paper liner (Flexmark® CV600 W, manufactured by Flexcon Co., Inc.,Spencer MA.) so that the imaged layer contacted the vinyl sheet. This composite was then passed through the hot nip of an IT 6000 hot roll laminator under the same conditions as in example 12. The laminated composite exiting the hot nip was cooled to room temperature (1 minute) and the two sheets were pulled apart leaving image, dielectric, and conductive coatings on the cling vinyl sheet.

### Example 14 (Comparative)

An electrographic element was prepared as described in Example 12 except that the dielectric layer coating solution was prepared from the following ingredients.

| Ingredient | Parts By Weight |
|---|---|
| Toluene | 46.1 |
| Methyl ethyl ketone | 19.1 |
| Dowanol® PM⁽⁸⁾ | 3.8 |
| Polyvinyl butyral (Butvar® B-76⁽²⁾) | 10.0 |
| Styrene-acrylonitrile copolymer (Lustran® 33-1000⁽¹¹⁾) | 10.0 |
| Syloid®⁽⁵⁾ Amorphous silica (ave. particle size 3 µm) | 3.0 |

The resulting electrographic element was imaged and processed as described in Examples 12 and 13, except that as the resulting laminated composites exited the hot nip, the two component sheets were pulled apart for each composite, leaving image and dielectric coatings on the vinyl sheet and the conductive layer on the conductive paper sheet.

### Example 15 (Comparative)

An electrographic element was prepared as follows: A conductive coating solution was prepared from the following ingredients:

| Ingredient | Parts By Weight |
|---|---|
| Ethyl alcohol | 38.0 |
| Deionized water | 38.0 |
| Chemistat® 6300H⁽¹⁾ | 24.0 |

The above ingredients were added in the order shown and mixed in a Lightnin® mixer for 10 minutes. The coating solution was then applied to a ∼50 µm (2 mil) thick, untreated, polyethylene terephthalate film web using a reverse roll coater and hot air dried to give a dry coating weight of 2.4 g/m².

A dielectric layer coating solution was prepared from the following ingredients.

| Ingredient | Parts By Weight |
|---|---|
| Dowanol® PM⁽⁸⁾ | 5.86 |
| Toluene | 49.19 |
| Methyl ethyl ketone | 19.10 |
| Translink® Calcined clay⁽¹⁰⁾ (ave. particle size 1.4 µm) | 1.00 |
| Syloid®⁽⁵⁾ 74 Amorphous silica (Ave. Part. Size 9 µm) | 2.10 |
| Styrene-acrylonitrile copolymer (Lustran® 33-1000⁽¹¹⁾) | 22.75 |

The above ingredients were added as shown and mixed in a Kady Zolver tank under slow speed agitation and then allowed to mix for 60 minutes at high speed. The solution was overcoated onto the previously coated film web using a reverse roll coater and hot air dried to give a dry coating weight of ∼ 4.8 g/m².

An adhesive layer coating solution was prepared from the following ingredients.

| Ingredient | Parts By Weight |
|---|---|
| Methyl ethyl ketone | 16.00 |
| Toluene | 64.40 |
| Dowanol®⁽⁸⁾ | 4.00 |
| Polycaprolactone⁽¹⁶⁾ | 10.00 |
| Morthane® CA-116⁽¹²⁾ urethane resin | 3.00 |
| Calcined clay Translink®⁽¹⁰⁾ (ave. particle size 1.4 µm) | 0.20 |
| Syloid®⁽⁵⁾ Amorphous silica (ave. particle size 9 µm) | 0.40 |

The coating solution was made by first adding the methyl ethyl ketone, toluene and propylene glycol methyl ether acetate to a 55 gallon tub containing a Lightnin® mixer. The calcined clay and the amorphous silica slurry were then added and mixed for 30 minutes. Polycaprolactone was then slowly added under agitation and allowed to mix until dissolved. The urethane resin was then slowly added under agitation and allowed to mix until dissolved. The resulting coating solution was overcoated onto the previously coated film web using a reverse roll coater and hot air dried to give a dry coating thickness of 2.0 µm, to form the electrographic element. Samples of the coated film web were slit to 36 inch (∼ 91.4 cm) width, conditioned at 50% RH and imaged in a Calcomp® 6800 series color electrostatic plotter using standard toners and plotting conditions to form a four color imaged layer on the adhesive surface of the electrographic element.

The laminating step was performed by first laying the imaged electrographic element on a sheet of Rexcal® 4000-000 clear cast vinyl sheet (a product of Rexham Branded Products, Lancaster, South Carolina) so that the imaged layer contacted the vinyl sheet. This composite was then passed through the hot nip of an IT 6000 hot roll laminator at a speed of 1.02 cm/second, at a temperature of 121°C and at a pressure of 70 kg/cm². Within 15 seconds of the exit of the laminated composite from the hot nip, the polyethylene terephthalate support contiguous to the conductive layer was stripped therefrom.

### Example 16 (Comparative)

An electrographic element was prepared and processed as described in Example 15 except that the laminating step was performed by first laying the imaged electrographic element on a sheet of Rexcal® 4000-000 clear cast vinyl sheet so that the imaged layer contacted the vinyl sheet. This composite was then laminated in a Heat Lamp Vacuum Applicator (a product of Graco Manufacturing Inc., Niles, Michigan), using a bake temperature of 118°C and a bake time of 10 minutes. Within 15 seconds of the removal of the laminated composite from the Heat Lamp Vacuum Applicator, the polyethylene terephthalate support contiguous to the conductive layer was stripped therefrom.

### Example 17. (Comparative)

An electrographic element was constructed by extrusion coating a polymeric resin onto a conductive carrier sheet. The conductive carrier sheet was conductivized opaque 90 g/m² paper base (supplied as OCB90 by Chartham Paper Mill, Canterbury, Kent, U.K.).

A layer of Ethylene Vinyl Alcohol (EVOH) ( Kuraray EPE 105A) was extruded onto the base using an extrusion coater to a coating weight of 9 g/m² at a coating line speed of 30 m/min. to form an image receptive dielectric layer having weak adhesion to the carrier sheet.

The coated carrier sheet was then slit to form 11 inch wide stock web (about 28 cm); A monochrome toned electrographic image was produced on the dielectric image receptive layer with a Versatec V80 plotter. This image was a mirror image of the desired image.

An adhesive layer coating solution was prepared as in example 9 and was coated onto the vinyl side of ScotchCal™ 220 adhesive backed vinyl. The mixture was dried in a forced air oven for 30 sec at 115°C. The material was cooled before any use. After cooling the surface was substantially tack free.

The contacting and adhering step was performed by first laying the imaged electrographic element from example 1 on to the vinyl so that the imaged layer contacted the layer of urethane. This composite was then passed through the hot nip of a hot roll laminator at a speed of 0.61 m/min at a pressure of 6.33 kg/cm² (cylinder pressure) and at 107°C. After the composite had cooled to room temperature the base was stripped from the image layer structure. The image on the vinyl support was viewed through the dielectric layer and was properly oriented. The image integrity and the visual quality were retained. The image had an attractive lustrous appearance.

### Example 18. (Comparative)

Using the electrographic element disclosed in example 17 imaged as disclosed in that example, the image was transferred onto a steel surface which had been sprayed with 3M Scotch™ Brand Spray Mount™ Artists Adhesive. The adhesive was permitted to dry for 1 minute. The contacting and adhesion step was performed by first laying the imaged electrographic element so that the imaged layer contacted the layer of adhesive sprayed onto the steel surface, and then pressing firmly across the structure. The paper support was stripped from the image receptive layer leaving the image on the steel. The dielectric layer acted as a protective layer overlaying the toner image.

### Example 19. (Comparative)

The process of example 18 was repeated but the image was transferred onto a wood surface that had been coated by spraying with 3M Scotch™ Brand Spray Mount™ Artists Adhesive.

### Example 20. (Comparative)

An electrographic element prepared in accordance with example 17 was imaged in a Versatec Spectrum color printer using Cyan, Magenta, Yellow and Black liquid toners. The image was then contacted and adhered onto a cardboard sheet having an adhesive coated thereon. The cardboard with the adhesive coated thereon is supplied by Pres-On Merchandizing Corporation of Madison Ill. under the trade name "50 pt. Claycote, Lo-tack", and exhibits adhesive properties at room temperature. Following the adhering step, the carrier sheet was removed and the dielectric image receptive layer with the image remained on the cardboard, with the dielectric layer overlaying the image.

### Example 21. (Comparative)

A conductive carrier was prepared by coating ∼0.50 µm (2 mil) thick untreated Polyethylene Terephthalate film (PET) with a conductive coating prepared by adding in a portable mix tank, 38.00 parts of Ethyl Alcohol and 38.00 parts of Deionized Water and mixing therewith with a Lightning mixer for 10 minutes, 24 parts of Chemistat® 6300H containing 8% solids. The coating was applied using reverse roll coating and hot air drying at 115°C for two minutes to give a dry coating weight of 2.4 g/m².

The conductivized carrier sheet was next reverse roll coated with a dielectric layer to achieve a dry dielectric layer coating weight of 4.8 g/m². Hot air drying was again used. The dielectric layer was prepared as follows: 5.86 parts by weight of Dowanol® PM, 49.19 parts by weight of Toluene and 19.10 parts by weight of Methyl Ethyl Ketone were added to a Kady Zolver Tank. To the mixture were added 2.10 parts by weight of Syloid 74 Amorphous Silica and 1.00 part by weight of Translink® calcined clay under very slow speed agitation, and then allowed to mix for 30 minutes under high speed agitation. After this, 22.75 parts by weight of Lustran®⁽¹¹⁾ 33-1000 were added very slowly under slow speed agitation and mixed at high speed for 60 minutes.

Samples of this coated material were slit to 91.44 cm (36 inches) width, and conditioned at 50% Relative Humidity. A colored image was generated on the dielectric surface of a 91.44 cm (36 inch) wide sample of this material, using a Calcomp 68436 electrostatic printer and standard toners and printing conditions, however the image produced was a mirror image of the desired final image.

Using the same lamination process as in example 17 the toned image was transferred onto a heavy cardboard sheet coated with a heat activated adhesive supplied by the Pres-On Merchandizing Corp. of Addison Ill. under the trade name "Pres-on® 80 pt. Heat activated Claycote". After the image surface was contacted and adhered to the heat activated claycote, the carrier sheet was removed. The full color image was successfully transferred, the final result being the toned colored image covered by the dielectric layer which acts as a protective layer.

### Example 22. (Comparative)

Using the electrographic element of example 20 imaged as described in example 20, the dielectric image receptive layer and the toned color image were successfully transferred to a steel and to a wood surface both which had previously been coated with 3M Scotch™ Brand Spray Mount™ Artists Adhesive, using the process of examples 18 and 19 above respectively. In both instances the carrier layer was removed after contacting and adhering the imaged layer with the tacky permanent receptor leaving on the permanent receptor a right reading image of the original, covered by a transparent dielectric layer.

### Example 23

An electrographic element was prepared and imaged as in example 7. A cold mounting pressure sensitive adhesive film (Clearmount™ from Sallmetall of Dallas, Texas) was applied to white pressure sensitive vinyl (Rexcal™ 4000 from Rexham Branded Products, Lancaster, South Carolina) and the backing sheet removed to expose the adhesive. The imaged element was applied to the adhesive with modest pressure from a wiping tool without heat. Thus the adhesive properties of the combined dielectric and adhesive layer were not activated. The base was then removed, the break occurring between the release layer and the combined dielectric and adhesive layer. The toned image and the dielectric coating remained adhered to the vinyl sheet and the release coating remained on the paper. Image quality was good. Transfer was complete.

### Example 24

The adhesive laminating film of Example 23 was applied to a 4 inch diameter galvanized steel can and the backing sheet removed. An imaged element prepared as described in Example 23 was applied to the adhesive layer with modest pressure from a wiping tool. The temporary carrier sheet was removed to expose the image. Image quality was good and transfer was complete.

### Example 25

The steps of Example 23 were followed except that the paper used in the base was opaque conductive paper, 70 g/m², Product OCB-12 from Chartham Paper Mills, Canterbury, Kent, U.K. Image quality was good.

The resulting samples from examples 23, 24 and 25 were tested for adhesive strength of the image layer structure onto the permanent receptor by the tape pull test using 810 Scotch™ Brand Tape. All passed.

The same samples were tested for abrasive strength by scrubbing with household liquid soap, hot water and a fibre scrubbing brush for one minute. No damage to the image was seen.

Those skilled in the art having the benefit of the teachings of the present invention as hereinabove set forth, can effect numerous modifications thereto. These modifications are to be construed as being encompassed within the scope of the present invention as set forth in the appended claims.

## Claims

1. An electrographic element comprising a conductive base (11), and a transparent imaging layer structure (21) having a surface (23) on which a toned image is intended to be formed, the transparent imaging layer structure is transparent in at least one region in the visible spectral region and the transparent imaging layer structure includes a dielectric layer characterised in that the dielectric layer comprises a single combined dielectric and adhesive layer (16) whose adhesive properties are activated at a pressure which is above ambient pressure of the electrographic element.

2. An electrographic element according to claim 1, wherein the base comprises a conductive carrier layer (12) having a release layer (15) coated thereon said release layer being in contact with said transparent imaging layer structure (21).

3. An electrographic element according to claim 1, wherein the base comprises a conductive carrier layer comprising a substrate carrier (12) sheet having a first conductive layer thereon and a release layer (15) on said conductive layer, said release layer being in contact with said imaging layer structure (21).

4. An electrographic element according to claim 1, 2 or 3, wherein the adhesive properties of said combined dielectric and adhesive layer (16), are activated at a pressure and a temperature, which are above ambient pressure and temperature of the electrographic element, and wherein the toned image is formed on the combined dielectric and adhesive layer.

5. An electrographic element according to any preceding claim, wherein the image layer structure (21) comprises a conductive layer (18), and the toned image is formed on the combined dielectric and adhesive layer.

6. An electrographic element according to any preceding claim, wherein the image layer structure comprises a protective layer (19), a conductive layer (18) over said protective layer, and said combined dielectric and adhesive layer (16) over said conductive layer and wherein the toned image is formed on the combined dielectric and adhesive layer.

7. An electrographic element according to claim 1, wherein the base comprises a carrier sheet (12) having a conductive layer thereon in contact with the image layer structure (21).

8. An electrographic element according to claim 7, wherein the image layer structure comprises a protective layer, and said combined dielectric and adhesive layer over said protective layer, and wherein the toned image is formed on the combined dielectric and adhesive layer.

9. An electrographic element according to any preceding claim, wherein a side of the base in contact with the imaging layer structure (21) comprises an image pattern and wherein a surface (23) of the imaging layer structure in contact with said embossed pattern is embossed with such image pattern.

10. An electrographic element according to any one of claims 1 to 9, wherein the imaging layer structure includes a UV radiation absorbent layer, such layer located between the base (11) and the toned electrographic image.

11. An electrographic element in accordance with any one of the preceding claims, wherein at least one layer has been applied by extrusion coating.

12. An electrographic element in accordance with any preceding claim, wherein the combined dielectric and adhesive layer (16) comprises one or more polymers selected from the group consisting of polyurethanes; polyamides; polyolefins; polycarbonates; polystyrenes; and/or polymers or copolymers of acrylic or methacrylic acids, esters, amides, such as polymethylmethacrylate, styrenes, acrylonitriles, vinyl esters, alkyd substituted vinyl esters, vinyl alcohol, vinyl acetals e.g., polyvinyl butyral, vinyl chloride, vinyl fluoride, vinylidene chloride, 1,4-dienes e.g., butadiene, isoprene and the like; ethylene/vinyl alcohol copolymers; copolymers or styrene with acrylic and methacrylic monomers; modified cellulosic resins such as cellulose acetate and cellulose acetate butyrate; block copolymer thermoplastic rubbers e.g., styrene/ethylene/butylene/styrene block copolymer or combinations thereof.

13. An electrographic imaging process for forming an image on a receptor surface comprising the steps of:
A electrographically generating a toned image on the surface of a transparent imaging layer structure (21) of an electrographic element (10) comprising a conductive base (11) and the transparent imaging layer structure, wherein the transparent imaging layer structure is transparent in at least one region in the visible spectral region and includes a dielectric layer;
B adhering the electrographic element onto said receptor surface (50) so that the toned image (48) is between the imaging layer structure and the receptor surface;
characterised in that the dielectric layer comprises a single combined dielectric and adhesive layer whose adhesive properties are activated at a pressure which is above ambient pressure of the electrographic element.

14. An electrographic imaging process as claimed in claim 14 and further comprising the step of removing the base from the imaging layer structure (21).

15. An imaged article formed using an electrographic element as claimed in any one of claims 1 to 12 and comprising in the order given:
a receptor substrate (50); a toned image (48); and a single continuous transparent layer comprising an adhered combined dielectric and adhesive layer (16).

## Patentansprüche

1. Elektrographisches Element, das aufweist: eine leitfähige Unterlage (11) und eine lichtdurchlässige Abbildungsschichtstruktur (21) mit einer Oberfläche (23), auf der ein getöntes Bild ausgebildet werden soll, wobei die lichtdurchlässige Abbildungsschichtstruktur in mindestens einem Bereich im sichtbaren Spektralbereich lichtdurchlässig ist und die lichtdurchlässige Abbildungsschichtstruktur eine dielektrische Schicht aufweist, dadurch gekennzeichnet, daß die dielektrische Schicht eine einzige kombinierte dielektrische und Haftschicht (16) aufweist, deren Hafteigenschaften bei einem Druck aktiviert werden, der über dem Umgebungsdruck des elektrographischen Elements liegt.

2. Elektrographisches Element nach Anspruch 1, wobei die Unterlage eine leitfähige Trägerschicht (12) mit einer darauf aufgebrachten Trennschicht (15) aufweist, wobei sich die Trennschicht in Kontakt mit der lichtdurchlässigen Abbildungsschichtstruktur (21) befindet.

3. Elektrographisches Element nach Anspruch 1, wobei die Unterlage eine leitfähige Trägerschicht mit einem Substratträger (12) mit einer darauf aufgebrachten ersten leitfähigen Schicht und einer Trennschicht (15) auf der leitfähigen Schicht aufweist, wobei sich die Trennschicht in Kontakt mit der Abbildungsschichtstruktur (21) befindet.

4. Elektrographisches Element nach Anspruch 1, 2 oder 3, wobei die Hafteigenschaften der kombinierten dielektrischen und Haftschicht (16) bei einem Druck und einer Temperatur aktiviert werden, die über dem Umgebungsdruck und der Temperatur des elektrographischen Elements liegen, und wobei das getönte Bild auf der kombinierten dielektrischen und Haftschicht ausgebildet wird.

5. Elektrographisches Element nach einem der vorstehenden Ansprüche, wobei die Abbildungsschichtstruktur (21) eine leitfähige Schicht (18) aufweist und das getönte Bild auf der kombinierten dielektrischen und Haftschicht ausgebildet wird.

6. Elektrographisches Element nach einem der vorstehenden Ansprüche, wobei die Abbildungsschichtstruktur eine Schutzschicht (19) eine leitfähige Schicht (18) über der Schutzschicht und die kombinierte dielektrische und Haftschicht (16) über der leitfähigen Schicht aufweist, und wobei das getönte Bild auf der kombinierten dielektrischen und Haftschicht ausgebildet wird.

7. Elektrographisches Element nach Anspruch 1, wobei dir Unterlage eine Trägerschicht (12) mit einer darauf aufgebrachten leitfähigen Schicht im Kontakt mit der Abbildungsschichtstruktur (21) aufweist.

8. Elektrographisches Element nach Anspruch 7, wobei die Abbildungsschichtstruktur eine Schutzschicht und die kombinierte dielektrische und Haftschicht über der Schutzschicht aufweist, und wobei das getönte Bild auf der kombinierten dielektrischen und Haftschicht ausgebildet wird.

9. Elektrographisches Element nach einem der vorstehenden Ansprüche, wobei eine Seite der Unterlage, die sich im Kontakt mit der Abbildungsschichtstruktur (21) befindet, ein Abbildungsmuster aufweist, und wobei eine Oberfläche (23) der Abbildungsschichtstruktur, die sich im Kontakt mit dem geprägten Muster befindet, mit einem solchen Abbildungsmuster geprägt wird.

10. Elektrographisches Element nach einem der Ansprüche 1 bis 9, wobei die Abbildungsschichtstruktur eine Absorptionsschicht für UV-Strahlung aufweist, wobei sich diese Schicht zwischen der Unterlage (11) und dem getönten elektrographischen Bild befindet.

11. Elektrographisches Element nach einem der vorstehenden Ansprüche, wobei mindestens eine Schicht durch Extrusionsbeschichtung aufgetragen worden ist.

12. Elektrographisches Element nach einem der vorstehenden Ansprüche, wobei die kombinierte dielektrische und Haftschicht (16) ein oder mehrere Polymere aufweist, die aus der Gruppe ausgewählt sind, die aus Polyurethanen; Polyamiden; Polyolefinen; Polcarbonaten, Polystyrolen und/oder Polymeren oder Copolymeren von Acryl - oder Methacrylsäure, Estern, Amiden, wie z. B. Polymethylmethacrylat, Styrolen, Acrylnitrilen, Vinylestern, alkydsubstituierten Vinylestern, Vinylalkohol, Vinylacetalen, wie z. B. Polyvinylbutyral, Vinylchlorid, Vinylfluorid, Vinylidenchlorid, 1,4-Dienen, wie z. B. Butadien, Isopren und dergleichen, Ethylen/Vinylalkohol-Copolymeren, Copolymeren von Styrol mit Acrylsäure- und Methacrylsäure-Monomeren; modifizierten Celluloseharzen, wie z. B. Celluloseacetat und Celluloseacetatbutyrat; thermoplastischen Blockcopolymer-Kautschuken, z. B. Styrol/Ethylen/Butylen/Styrol-Blockcopolymer, oder Kombinationen daraus besteht.

13. Elektrographisches Abbildungsverfahren zum Erzeugen einer Abbildung auf einer Rezeptorfläche, mit den folgenden Schritten:
A. Elektrographische Erzeugung einer getönten Abbildung auf der Oberfläche einer lichtdurchlässigen Abbildungsschichtstruktur (21) eines elektrographischen Elements (10), das eine leitfähige Unterlage (11) und die lichtdurchlässige Abbildungsschichtstruktur aufweist, wobei die lichtdurchlässige Abbildungsschichtstruktur in mindestens einem Bereich im sichtbaren Spektralbereich lichtdurchlässig und in der eine dielektrischen Schicht eingeschlossen ist;
B. Aufkleben des elektrographischen Elements auf die Rezeptorfläche (50), so daß sich die getönte Abbildung (48) zwischen der Abbildungsschichtstruktur und der Rezeptorfläche befindet;
dadurch gekennzeichnet, daß die dielektrische Schicht eine einzige kombinierte dielektrische und Haftschicht aufweist, deren Hafteigenschaften bei einem Druck aktiviert werden, der über dem Umgebungsdruck des elektrographischen Elements liegt.

14. Elektrographisches Abbildungsverfahren nach Anspruch 14, das ferner den Schritt zum Entfernen der Unterlage von der Abbildungsschichtstruktur (21) aufweist.

15. Gegenstand, der unter Verwendung eines elektrographischen Elements nach einem der Ansprüche 1 bis 12 mit einer Abbildung versehen ist und in der angegebenen Reihenfolge aufweist:
ein Rezeptorsubstrat (50); eine getönte Abbildung (48); und eine einzige zusammenhängende lichtdurchlässige Schicht mit einer aufgeklebten kombinierten dielektrischen und Haftschicht (16).

## Revendications

1. Elément électrographique comprenant un support conducteur (11) et une structure de couches transparente formant une image (21) avec une surface (23) sur laquelle une image à encre pulvérisée (image "toner") est destinée à être formée, la structure de couches transparente formant une image est transparente dans au moins une partie de la région spectrale visible et la structure de couches transparente formant une image comprend une couche diélectrique caractérisée en ce que la couche diélectrique comprend une seule couche combinée diélectrique et adhésive (16) dont les propriétés adhésives sont activées à une pression qui est supérieure à la pression ambiante de l'élément électrographique.

2. Elément électrographique selon la revendication 1, dans lequel le support comprend une couche support conductrice (12) comportant une couche de séparation (15) déposée sur celle-ci, ladite couche de séparation étant en contact avec ladite structure de couches transparente formant une image (21).

3. Elément électrographique selon la revendication 1, dans lequel le support comprend une couche support conductrice comprenant une feuille support de substrat (12) portant une première couche conductrice sur celle-ci ainsi qu'une couche de séparation (15) sur ladite couche conductrice, ladite couche de séparation étant en contact avec ladite structure de couches formant une image (21).

4. Elément électrographique selon la revendication 1, 2 ou 3, dans lequel les propriétés adhésives de ladite couche combinée diélectrique et adhésive (16) sont activées à une pression et à une température, qui sont supérieures à la pression et à la température ambiantes de l'élément électrographique, et dans lequel l'image à encre pulvérisée est formée sur la couche combinée diélectrique et adhésive.

5. Elément électrographique selon l'une quelconque des revendications précédentes, dans lequel la structure de couches d'image (21) comprend une couche conductrice (18), et l'image à encre pulvérisée est formée sur la couche combinée diélectrique et adhésive.

6. Elément électrographique selon l'une quelconque des revendications précédentes, dans lequel la structure de couches d'image comprend une couche protectrice (19), une couche conductrice (18) par-dessus ladite couche protectrice, et ladite couche combinée diélectrique et adhésive (16) par-dessus ladite couche conductrice et dans lequel l'image à encre pulvérisée est formée sur la couche combinée diélectrique et adhésive.

7. Elément électrographique selon la revendication 1, dans lequel le support comprend une feuille support (12) portant une couche conductrice sur celle-ci en contact avec la structure de couches d'image (21).

8. Elément électrographique selon la revendication 7, dans lequel la structure de couches d'image comprend une couche protectrice et ladite couche combinée diélectrique et adhésive par-dessus ladite couche protectrice, et dans lequel l'image à encre pulvérisée est formée sur la couche combinée diélectrique et adhésive.

9. Elément électrographique selon l'une quelconque des revendications précédentes, dans lequel le côté du support en contact avec la structure de couches d'image (21) comprend un motif d'image et dans lequel la surface (23) de la structure de couches d'image en contact avec ledit motif en relief est imprimée en relief avec un tel motif d'image.

10. Elément électrographique sel on l'une quelconque des revendications 1 à 9, dans lequel la structure de couches d'image comprend une couche qui absorbe le rayonnement UV, une telle couche est localisée entre le support (11) et l'image à encre pulvérisée électrographique.

11. Elément électrographique conformément à l'une quelconque des revendications précédentes, dans lequel au moins une couche a été appliquée par un procédé de revêtement par extrusion.

12. Elément électrographique conformément à l'une quelconque des revendications précédentes, dans lequel la couche combinée diélectrique et adhésive (16) comprend un ou plusieurs polymères choisis parmi le groupe composé de polyuréthanes; de polyamides; de polyoléfines; de polycarbonates; de polystyrènes; et/ou de polymères ou de copolymères d'acides acryliques ou méthacryliques, d'esters, d'amides, tels que le polyméthacrylate de méthyle, de styrènes, d'acrylonitriles, d'esters de vinyle, d'esters de vinyle substitués par des alkydes, d'un alcool de vinyle, d'acétals de vinyle, par exemple le butyral de polyvinyle, d'un chlorure de vinyle, d'un fluorure de vinyle, d'un chlorure de vinylidène, de 1,4-diènes, par exemple le butadiène, l'isoprène et équivalents; de copolymères d'éthylène et d'alcool de vinyle; de copolymères de styrène avec des monomères acryliques et méthacryliques; des résines cellulosiques modifiées telles qu'un acétate de cellulose et un butyrate d'acétate de cellulose; de caoutchoucs thermoplastiques de copolymères blocs, par exemple le copolymère bloc de styrène/éthylène/butylène/styrène; ou des combinaisons de ces composés.

13. Procédé électrographique formant une image destinée à la formation d'une image sur une surface réceptrice comprenant les étapes:
A. de création électrographique d'une image à encre pulvérisée sur la surface de la structure de couches transparente formant une image (21) d'un élément électrographique (10) comprenant un support conducteur (11) et la structure de couches transparente formant une image, dans laquelle la structure de couches transparente formant une image est transparente dans au moins une région de la région spectrale visible et comprend une couche diélectrique;
B. de collage de l'élément électrographique sur ladite surface réceptrice (50) de sorte que l'image à encre pulvérisée (48) se situe entre la structure de couches d'image et la surface réceptrice;
caractérisé en ce que la couche diélectrique comprend une seule couche combinée diélectrique et adhésive dont les propriétés adhésives sont activées à une pression qui est supérieure à la pression ambiante de l'élément électrographique.

14. Procédé électrographique formant une image comme revendiqué dans la revendication 14 et comprenant en outre l'étape de retrait du support de la structure de couches d'image (21).

15. Produit mis en image formé en utilisant un élément électrographique comme revendiqué dans l'une quelconque des revendications 1 à 12 et comprenant dans l'ordre donné:
un substrat récepteur (50), un image à encre pulvérisée (48); et une seule couche continue transparente comprenant une couche collée combinée diélectrique et adhésive (16).
